(19) Europäisches Patentamt European Patent Office Office européen des brevets

(11) **EP 2 586 891 A1**

(12) **EUROPÄISCHE PATENTANMELDUNG**

(43) Veröffentlichungstag:
**01.05.2013 Patentblatt 2013/18**

(51) Int Cl.:
*C23C 30/00* (2006.01)   *A47J 36/00* (2006.01)

(21) Anmeldenummer: **11405345.7**

(22) Anmeldetag: **25.10.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Hort, Stefan**
**3973 Venthône (CH)**

(72) Erfinder: **Hort, Stefan**
**3973 Venthône (CH)**

(54) **Kochgerät**

(57) Ein für zu erwärmendes Kochgut antihaftend beschichtetes Kochgerät weist im Beschichtungsmaterial wärmeleitende Partikel mit einer Wärmeleitfähigkeit grösser 200 W/m·°K auf. Die Grösse sowie die Lage der Partikel in der Beschichtung ist derart, dass sie auf dem Kochgeräteinnenboden mit einer Berührungstoleranz von weniger als 10% der gesamten Schichtdicke aufliegen und bis zur Beschichtungsoberseite mit einer Schichtoberseitentoleranz von ±10% reichen. Als Partikel werden beispielsweise Diamantkristalle, Aluminiumpartikel, wahlweise mit und ohne Additivierung mit Carbonnanotubes, Carbonnanotubes alleine und/oder Siliziumcarbid verwendet. Die die wärmeleitenden Partikel integrierende Beschichtung wirkt antihaftend für das Kochgut. Die Beschichtung kann zweischichtig aufgebaut sein mit einem Primer (im Wesentlichen: Polytetrafluorethylen, Perfluoralkyd, Siliziumoxid, Polyamidimid) und einer antihaftend wirkenden Beschichtung (im Wesentlichen: Polytetrafluorethylen, Perfluoralkyd, Farbpigmente). Es kann aber auch lediglich eine Solgelbeschichtung gewählt werden, welche auch ohne wärmeleitende Partikel verwendbar ist.

einzige Figur

EP 2 586 891 A1

**Beschreibung**

**Technisches Gebiet**

Die Erfindung betrifft ein für zu erwärmendes Kochgut antihaftend beschichtetes Kochgerät.

**Stand der Technik**

Es sind vielfältige antihaftend wirkende Beschichtungen auf Innenbereichen, insbesondere auf Innenböden von Kochgeräten bekannt. In der Regel werden Polytetrafluorethylen-haltige (PTFE) Beschichtungen gewählt. Um die Beschichtung widerstandsfähig gegen Abrasion zu machen, wurden dem Schichtmaterial ultrafeine Diamantkristalle in der Grössenordnung von 200 Å bis 1200 Å (10 Å = 1 nm) beigemischt [JP 08173321]. In der JP 7067784 wurden Diamantkristalle kleiner 100 Å beigemischt.

Die in der EP 1 048 751 beschriebene antihaftende Beschichtung eines Küchengerätes hatte auf dem Geräteinnenboden eine untere Mischschicht mit einer Dicke zwischen 50 $\mu$m und 150 $\mu$m. Auf der Mischschicht lag eine mittlere Schicht mit einer Dicke von 1 1 $\mu$m bis 10 $\mu$m und auf dieser wiederum eine Deckschicht mit einer Dicke von 2 $\mu$m bis 10 $\mu$m. In die Mischschicht (Dicke zwischen 50 $\mu$m und 150 $\mu$m) waren Diamantminikristalle mit einem Durchmesser von 0,5 $\mu$m bis 10 $\mu$m und in die mittlere Schicht Diamanten mit ebenfalls einem Durchmesser von 0,5 $\mu$m bis 10 $\mu$m eingelagert. Bei der in die weitere Schicht eingelagerten Diamanten waren die Diamantendurchmesser und die Schichtdicke derart passend zu wählen, dass die Diamanten jeweils kleiner waren als die Schichtdicke. Die Diamanten in der untersten Mischschicht mit ihren 1 $\mu$m bis 10 $\mu$m Durchmesser waren immer bedeutend kleiner als die Schichtdicke von 50 $\mu$m bis 150 $\mu$m.

**Aufgabe der Erfindung**

Aufgabe der Erfindung ist es, eine antihaftend wirkende und sehr gut wärmeleitende Beschichtung auf einem Küchengeräteinnenboden zu schaffen.

**Lösung der Aufgabe**

Die EP 1 048 751 behauptete zwar auch eine gut wärmeleitende Beschichtung auf einem Küchengeräteinnenboden zu schaffen; sie übersah jedoch, dass im Verhältnis zur Schichtdicke, kleine Diamantkristalle in einem wärmeisolierenden Schichtmaterial keine gute Wärmeleitung zwischen dem Küchengeräteinnenboden und dem auf der Beschichtung liegenden Kochgut erbringen konnten. Die Wärmeleitfähigkeit der in der EP 1 048 751 gewählten antihaftenden PTFE-Schicht (Polytetrafluorethylen-) betrug 0,25 W/m·°K, d.h. sie war 13'000-mal geringer als diejenige der eingelagerten Minidiamanten. In Bezug auf eine Wärmeleitung durch die Gesamtbeschichtung erreichten die "gut wärmeleitenden Punkte" nur eine sehr geringe Wirkung.

Die Erfindung geht nun von der Erkenntnis aus, dass eine gute Wärmeleitung nur dann erreichbar ist, wenn gut wärmeleitende Partikel bis auf eine Berührungstoleranz auf dem "nackten" Geräteinnenboden aufliegen und diese Partikel bis auf eine Schichtoberseitentoleranz an die Oberseite der Oberfläche der gesamten Beschichtung reichen.

Unter einer Berührungstoleranz wird ein äusserst geringer Abstand einer Partikelfläche gegenüber dem "nackten" Küchengeräteinnenboden verstanden. Dieser Abstand kann sich ergeben, in dem ein "Hauch" von Schichtmaterial sich zwischen den "nackten" Geräteinnenboden und der betreffenden "Partikelauflagefläche" schiebt. Hierfür können z. B. Oberflächenspannungen oder auf dem noch unbehandelten Innenboden befindliche Filme verantwortlich sein. Die Berührungstoleranz liegt jedoch unter 1 $\mu$m, wobei hierbei Teilchen des Beschichtungsmaterials (z. B. des Primers, Antihaftbeschichtung, ...) eine Rolle spielen können.

Die gut wärmeleitenden Partikel sollen gemäss Erfindung eine Dicke entsprechend der gesamten Schichtdicke aufweisen. Sofern es mehrere Schichten gibt, ist der Partikeldurchmesser in der Grössenordnung des gesamten Schichtpaketes. Aufgrund von Oberflächenspannung können die Partikelspitzen vom Schichtmaterial zufällig oder auch gewollt überzogen sein und dann auch über die Schicht bzw. das Schichtpaket überzogen herausragen. Überzieht die Oberflächenspannung einige oder alle Partikel nicht, so überragen diese die Schicht bzw. das Schichtpaket. Ein Überragen ist jedoch nur dann zulässig, wenn das Partikelmaterial auch antihaftende Eigenschaften besitzt, wie beispielsweise beim Diamanten. Zeigt das Partikelmaterial keine antihaftende Eigenschaft, wie beispielsweise bei Aluminium, so muss der der Schichtoberseite benachbarte Teil z.B. des Aluminiumteils mit einer antihaftend wirkenden Schicht mit einer vorzugsweisen Schichtdicke von 1 $\mu$m bis 2 $\mu$m überzogen sein.

Als wärmeleitende Partikel können nun Diamantkristalle (Wärmeleitfähigkeit 2300 W/m·°K bis 3300 W/m·°K) verwendet werden. Die hier angegebene Wärmeleitfähigkeit bezieht sich auf für Kochgeräte übliche Temperaturen zwischen 100 °C und 200 °C. Da, wie unten beschrieben, als Beschichtung ein zweischichtiges Schichtenpaket mit einer Schichtdicke zwischen 20 μm und 40 μm verwendet wird, wird man je nach gewählter Gesamtschichtdicke Diamanten mit einem Durchmesser von 20 μm bis 40 μm wählen, wobei die Diamanten zur Verbesserung der Wärmeleitfähigkeit und zur Verbessung des Widerstandes gegen Abrasion auch geringfügig grösser sein dürfen.

Als wärmeleitende Partikel können auch Aluminiumpartikel (Wärmeleitfähigkeit 230 W/m·°K) verwendet werden. Bei Aluminium ist jedoch darauf zu achten, dass möglichst keine Ober flächenoxidation eintritt, da Oxide bereits schon bei den oben genannten Temperaturen einen deutlichen Rückgang der Wärmeleitfähigkeit bewirken würden. Ist die auf der Oberfläche des Aluminiumpartikels sich bildende Oxidationsschicht jedoch sehr dünn, kann auch eine Oxidation in Kauf genommen werden. Um eine Oxidation des Aluminiumpartikels zu verhindern, sollte die das Partikel umgebende Schicht basisch sein und der Durchmesser des Partikels geringfügig, d.h. 2 μm bis 4 μm kleiner sein als die Schichtdicke bzw. die Dicke des gesamten Schichtpakets.

Anstelle von Aluminium können auch andere, relativ gut wärmeleitende Materialien, wie Gold (314 W/ m·°K; teuer, aber werbewirksam), Silber (429 W/ m·°K ) oder Siliziumcarbid (SiC) (350 W/ m·°K) verwendet werden. Siliziumcarbid hat nicht nur eine gute Wärmeleitfähigkeit, es ist zudem auch noch sehr hart (Mohs 9,6) und gibt damit der Beschichtung auch Abriebfestigkeit. D.h., Siliziumcarbid ist fast so hart wie Diamant, weist eine gute Wärmeleitfähigkeit auf, ist physiologisch unbedenklich und das auch noch bei sehr geringen Herstellungskosten.

Kupfer hätte zwar eine gute Wärmeleitfähigkeit, oxidiert jedoch schnell, wobei die gebildete Oxidhaut sich leicht ablöst, zudem ist Kupfer nicht lebensmittelecht. Kupfer sollte somit nicht verwendet werden.

Die Wärmeleitfähigkeit von Aluminium beträgt nur etwa 7% derjenigen des Diamanten. Da Aluminium bedeutend billiger ist als Diamant, wird man sich in vielen Fällen auch mit der geringeren Wärmeleitfähigkeit zufrieden geben.

Die Wärmeleitfähigkeit von Carbonnanoröhrchen liegt bei 6000 W/m·°K. Werden nun diese Röhrchen durch eine Additivierung mit Aluminiumpulver zusammen verarbeitet, verbessern sich die mechanischen Eigenschaften derartiger Aluminiumpartikel erheblich. Die Erhöhung der Wärmeleitfähigkeit richtet sich nach der Menge zugemischter Nanoröhrchen.

Eine Additivierung der Nanoröhrchen mit den weiter oben genannten Metallen Gold, Silber und Siliziumcarbid ist zur Verbesserung deren mechanischer Daten möglich Anstatt Carbonnanoröhrchen mit Aluminium oder anderen Metallen zu additivieren, können diese Nanoröhrchen auch selbst als wärmeleitendes Element verwendet werden. Da die Nanoröhrchen sehr dünn sind - die Durchmesser liegen typischerweise bei 1 bis 50 Nanometern - ist es nur schwer möglich, sie auf dem Geräteinnenboden stehend bis annähernd zur Schichtoberseite anzuordnen. Man wird deshalb die Nanoröhrchen mit dem Schichtmaterial derart aufsprühen, dass sich eine Matte aus Nanoröhrchen bildet. Es kann nun nach einer vorherigen Imprägnierung des Geräteinnenbodens diese Matte aufgelegt werden und diese Matte dann mit einem aushärtenden Antihaftmaterial durchtränkt werden. Anstelle einer Matte können in einem thermischen Aufsprühverfahren auch Mattenteile zusammen mit dem Antihaftmittel aufgesprüht werden. Vorzugsweise wird man jedoch Bündel von Nanoröhrchen dem Sprühstahl zugeben. Da hierbei die einzelnen Nanoröhrchen in gutem mechanischen Kontakt zueinander liegen, ergibt eine derart hergestellte Beschichtung die gewünschte gute Wärmeleitfähigkeit durch die gesamte Beschichtung hindurch.

Anstatt Nanoröhrchen als Matten oder "Fitze" aufzubringen, können die Nanoröhrchen auch mit einem elektrostatischen Nasslackverfahren mit sehr hoher Spannung ausgerichtet auf den Geräteinnboden aufgebracht werden.

Über eine Materialauswahl der durch die Schicht hindurchreichenden Elemente sowie deren Dichte in der antihaftend wirkenden Schicht kann nun der Wärmedurchgang durch diese Schicht eingestellt werden. Eine derartige Einstellung kann zudem durch Mischung der oben angeführten unterschiedlichen Materialien erfolgen. Es können somit Diamantkristalle mit Aluminiumpartikeln, welche vorzugsweise eine Additivierung mit Carbonnanoröhrchen aufweisen, vermischt werden. Auch kann eine Vermischung derart erfolgen, dass teuere Partikel mit preisgünstigeren vermischt werden. Eine z. B. fehlende Abrasionsfestigkeit kann durch ein Hinzumischen eines harten Materials, insbesondere im oberen Beschichtungsbereich erreicht werden. Zur Erhöhung der Abrasionsfestigkeit eignet sich insbesondere Siliziumcarbid alleine oder auch als Zumischung.

Eine Abgleichung des Wärmedurchgangs in der antihaftend wirkenden Beschichtung sollte derart erfolgen, dass der Wärmedurchgang durch die Schicht in derselben Ordnung liegt, wie der Wärmedurchgang durch das Bodenmaterial des Kochgerätes. Ein zu hoher Wärmedurchgang durch die Beschichtung bringt nichts, da der Boden nicht genug Wärme nachliefert. Ein zu geringer Wärmedurchgang durch die Beschichtung in bezug auf den Kochgeräteboden ist jedoch zu vermeiden, da dann ein Wärmestau in der Schicht erfolgen könnte.

Als Anhaltswert für zu verwendende gut wärmeleitende Partikel in der aufzubringenden Beschichtung ist davon auszugehen, dass eine Beschichtung pro Flächeneinheit ein bis zehn Prozent des gut wärmeleitenden Materials enthalten sollte.

## Kurze Beschreibung der Zeichnungen

Die zur Erläuterung von Ausführungsbeispielen der Erfindung verwendete Zeichnung zeigt einen Querschnitt durch ein erfindungsgemässes beschichtetes Kochgerät mit einer gut wärmeleitenden Beschichtung, wobei es sich hier lediglich um eine schematische nicht massstabsgerechte Darstellung handelt.

**Wege zur Ausführung der Erfindung**

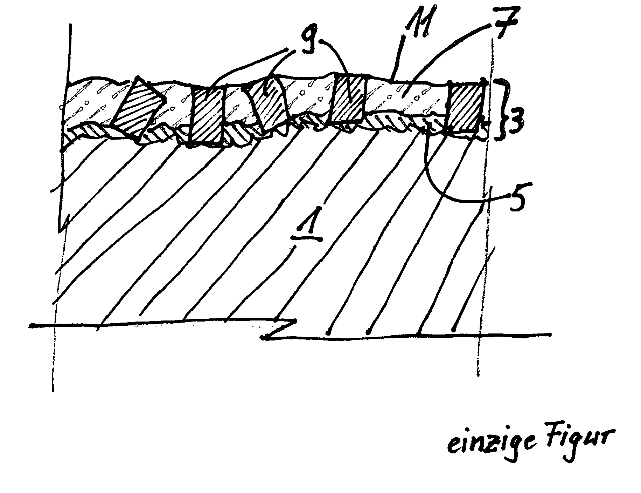

Der in Figur 1 im Querschnitt dargestellte Bereich zeigt einen Kochgeräteinnenboden 1 als Ausschnitt eines für zu erwärmendes Kochgut antihaftend beschichtetes Kochgeräts. Als Kochgeräte werden hier insbesondere Töpfe und Pfannen verstanden. Im allgemeinen ist das Bodenmaterial des Kochgerätes ein gut wärmeleitendes Material, wie beispielsweise Aluminium; es könnte jedoch auch Stahl oder Gusseisen als weniger gut wärmeleitendes Material verwendet werden. Der Innenboden 1 hat eine Rauhigkeit zwischen 15 $\mu$m und 30 $\mu$m. Vorzugsweise wird man eine Rauhigkeit von etwa 20 $\mu$m wählen. Die antihaftend wirkende Beschichtung 3 hat unmittelbar auf dem aufgerauten Innenboden 1 liegend einen dünnen Primer 5 und über diesem eine antihaftend wirkende Schicht 7. Der sehr dünne Primer 5 hat eine Schichtdicke typischerweise zwischen 2 $\mu$m und 10$\mu$m, vorzugsweise wird man eine Schichtdicke von 5 $\mu$m wählen. Die Antihaftschicht 7 weist typischerweise eine Schichtdicke zwischen 15 $\mu$m und 30 $\mu$m auf; vorzugsweise wird man eine Schichtdicke von etwa 20 $\mu$m wählen. In beide Schichten 5 und 7 sind wärmeleitende Partikel 9 mit einer Wärmeleitfähigkeit grösser 200 W/m·°K eingelagert. Die Grösse sowie die Lage der Partikel in der Beschichtung ist derart, dass sie auf dem Kochgeräteinnenboden 1 mit einer Berührungstoleranz von weniger als 10% der gesamten Dicke der Schicht 3 aufliegen und bis zur Beschichtungsoberseite mit einer Schichtoberseitentoleranz von $\pm$10% reichen. In dem in Figur 1 dargestellten Ausschnitt eines Pfanneninnenbodens werden als wärmeleitende Partikel 9 Diamanten verwendet.

Wie viel Diamanten müssen nun in eine antihaftend wirkende Beschichtung zugegeben werden, um gesamthaft eine gute sowie auch ausreichende Wärmeleitung durch die Beschichtung 3 zu erreichen? Hierzu soll die nachfolgende Überschlagsrechnung Anhaltspunkte liefern.

Als antihaftend wirkende Beschichtung wird vorzugsweise eine im wesentlichen Polytetrafluorethylen (PTFE) enthaltende Beschichtung 7 gewählt. Die Beschichtung 7 enthält zudem, je nach Rezeptur, weitere Materialien im Prozentbereich. Der Primer 5 enthält ebenfalls PTFE, jedoch in einer geringeren Konzentration. Der Primer enthält zudem noch wesentliche Anteile von Perfuoralkyd, Siliziumdioxyd und Polyamidimid. Je nach Rezeptur können weitere Stoffe im Prozentbereich, wie z. Farbpigmente, enthalten sein.

Die Wärmeleitfähigkeit der Schichten 5 und 7 vorerst ohne gemäss Erfindung eingebrachte gut wärmeleitende Partikel beträgt etwa 0,25 W/m·°K. D.h. die Wärmeleitfähigkeit der Schichten 5 und 7 ist etwa um den Faktor 1000 (genau rechnerisch 944) mal kleiner als diejenige des Materials des nackten Aluminiuminnenbodens 1 (236 W/m·°K). Um wenigstens dieselbe Wärmeleitung durch die Schichten 5 und 7 wie durch den Geräteinnenboden zu erhalten, sollte die Wärmeleitfähigkeit der beiden Schichten erfindungsgemäss entsprechend den nachfolgenden Überlegungen erhöht werden.

Es wird hier beispielsweise von einer Gesamtschichtdicke (Beschichtung 5 und 7) von 25 $\mu$m ausgegangen. Die Dicke des Kochgerätebodens aus Aluminium wird mit 5 mm angenommen. Für ein Wärmedurchgangsverhältnis pro Flächeneinheit von Beschichtung zu Kochgeräteboden ergibt sich Folgendes überschlagsmässig:

$$\frac{\text{Beschichtung}}{\text{Alu-Boden}} = \frac{0{,}25 \cdot 5 \cdot 10^{-3}}{25 \cdot 10^{-6} \cdot 236} = \frac{0{,}212}{1}$$

D.h. um gleichen Wärmedurchgang zu erhalten, sollte nun die Wärmeleitfähigkeit der Beschichtung um den Faktor 5, d.h. auf 1 W/m·°K erhöht werden werden.

Da die Gesamtschichtdicke 25 $\mu$m beträgt werden zur Erhöhung der Wärmeleitfähigkeit Diamanten mit einem Durchmesser von etwa 25$\mu$m - hier beispielsweise mit einer Wärmeleitfähigkeit von 2300 W/m·°K - zugegeben. Für die Einheitsschichtfläche gilt somit

$$0{,}25 \cdot F_S + 2300 \cdot F_D = 1,$$

wobei $F_D$ die mit Diamanten belegte Fläche und $F_s$ die restliche Schichtfläche ist.

$F_D + F_s$ ergeben zusammen die Einheitsfläche, d.h. "1".

Es gilt somit $(1-F_D) \cdot 0{,}25 + F_D \cdot 2300 = 1$

Hieraus ergibt sich, dass im Idealfall die Beschichtung flächenmässig einen Anteil von 0,0000326 Diamanten enthalten sollte. Da nun beim Beschichtungsprozess die Diamanten nicht in der optimalen Lage auf dem nackten Kochgeräteinnenboden und in der Beschichtung liegen, wird ein Wirkungsgrad hierfür von 0,1 bis 0,3 angenommen. Bei einem Wirkungsgrad von 0,1 wird somit ein Anteil von 0,000326 Diamanten benötigt. Wird überschlagsmässig von Diamanten mit Abmessungen von 25 $\mu$m 25 $\mu$m, also 625 ·$10^{-6}$ mm$^2$ ausgegangen, so werden pro 1 mm$^2$ [1/(625· $10^{-6}$)] ·0,000326 Diamanten in der Schicht benötigt, d.h. 326/625 = 0,522 Diamanten. D.h. es werden nur wenig Diamanten benötigt um den gewünschten Effekt zu erreichen. Es sei hier allerdings bemerkt, dass es sich nur um eine Überschlagsrechnung handelt; um sicher zu gehen sollte der Anteil Diamanten jedoch um den Faktor 10 erhöht werden. Zu viel eingebrachte Diamanten schaden nicht, können jedoch das Produkt verteuern. Man sollte deshalb eine gute experimentelle Überprüfung vornehmen.

In der Regel sind Diamanten teuer. In den hier vorgeschlagenen Abmessungen sind Diamanten jedoch nicht für Schmuckzwecke, sondern nur industriell verwendbar; auch ist hier nicht das Aussehen der Diamanten, sondern nur ihre physikalischen Eigenschaften ausschlaggebend. Derartige Diamanten sind in der Regel preisgünstig erhältlich. Zur Preisreduktion können jedoch als Ersatz für die Diamanten auch Aluminiumpartikel verwendet werden. Aluminium hat jedoch gegenüber Diamant eine etwa zehnfach kleinere Wärmeleitfähigkeit, ist nicht antihaftend, und ist von der Härte der Diamanten weit entfernt. Werden Diamanten durch Aluminiumpartikel ersetzt, so müssen zum Erreichen einer ausreichend hohen Abriebfestigkeit Kristalle bzw. Partikel hoher Härte zugesetzt werden. Hierzu kann z. B. Korund, Siliziumcarbid und artverwandte Materialien verwendet werden.

Da Aluminium nur 1/10 der Wärmeleitfähigkeit von Diamanten hat, muss gegenüber Diamanten die zehnfache Menge an Aluminium Teilchen eingebracht werden, also knapp 5 Teilchen pro mm$^2$. Da Aluminium nicht, wie Diamant, antihaftend ist, müssen die Aluminiumpartikel etwas kleiner als die Gesamtschichtdicke gewählt werden und jeweils unterhalb der Oberseite der Gesamtbeschichtung zu liegen kommen. Die Aluminiumpartikel müssen jeweils mit einem antihaftendwirkenden Schichtbereich überzogen sein. Da nun die Aluminiumpartikel mit einer dünnen "schlechtwärmeleitenden" Schicht überzogen sind, muss der Anteil von Aluminiumpartikel gegenüber der Überschlagsrechnung geringfügig erhöht werden. Erfahrungsgemäss sollte von 50 Aluminiumpartikel pro 1 mm$^2$ ausgegangen werden, um auf der sicheren Seite zu liegen. Dies ergibt eine Flächenbelegung mit Aluminiumpartikeln von etwa 3%.

Da die Aluminiumpartikel möglichst auch nicht oxidieren sollten -Aluminiumoxid ist ein schlechter Wärmeleiter -muss die die Aluminiumpartikel umgebende, antihaftend wirkende Schicht, einen basischen Charakter aufweisen.

Die Aluminiumpartikel können nun rund als Kügelchen oder auch als Spaltprodukte eckig ausgebildet sein. In den hier beschriebenen Beispielen haben sich eckige Aluminiumpartikel besser als kugelförmige bewährt.

Aluminiumpartikel haben gegenüber Diamanten mit Blick auf die Wärmeleitfähigkeit und die Härte schlechtere Eigenschaften. Die Wärmeleitfähigkeit von Aluminiumpartikeln kann jedoch wesentlich durch eine Additivierung mit Carbonnanoröhrchen verbessert werden. Nicht nur die Wärmeleitfähigkeit wird verbessert, auch die Festigkeit, welche bis zu derjenigen von Stahl gesteigert werden kann. Als hierzu beispielsweise verwendbares Firmenprodukt seien Baytubes der Firma Bayer MaterialSciences erwähnt.

Carbonnanotubes haben eine Wärmeleitfähigkeit von etwa 6000 W/m·°K, also etwa den doppelten Wert von Diamanten. Die mit Carbonnanoröhrchen additivierten Aluminiumpartikel kommen somit in die Nähe der Wärmeleitfähigkeit des Diamanten.

Anstatt Carbonnanotubes (Carbonnanoröhrchen) zur Additivierung von Aluminiumpartikeln zu verwenden, können diese Nanotubes auch direkt in die antihaftend wirkende Beschichtung integriert werden. Carbonnanotubes sind sehr dünne Röhrchen, wobei schon Verhältnisse von 1: 132'000'000 für ein Längen- zu Durchmesserverhältnis der Röhrchen erreicht worden ist. Nanotubes haben einen Durchmesser von etwa einem Nanometer und können bis zu einigen Mikrometern oder gar Millimetern lang sein. Aufgrund der in unserem Verwendungszweck guten Wärmeleitfähigkeit können nun die "Tubes" zusammen mit dem Schichtmaterial auf den Kochgeräteboden aufgesprüht werden. Ein Aufsprühen kann derart erfolgen, dass Teile aus einer "Nanotube-Matte" bzw. Bündel von Nanotubes oder die Nanotubes alleine aufgesprüht werden.

Um die Carbonnanotubes annähernd senkrecht zur Kochgeräteinnenbodenoberfläche stehend aufzusprühen kann man ein elektrostatisches Nasssprühverfahren verwenden. Hierbei wird das Kochgerät geerdet und ein elektrisch leitender Lack als antihaftendes Beschichtungsmaterial mit einer sehr hohen Spannung (20 kV bis 100 kV) auf den aufgerauten Kochgeräteinnenboden aufgesprüht. Die mit dem "Lack" aufgesprühten Nanonröhrchen stehen dann mehr oder weniger senkrecht auf dem Kochgeräteinnenboden.

Zur Erzeugung der Beschichtung auf dem Kochgeräteinnenboden wird dieser entfettet und mit einem abrasiven Mittel sandgestrahlt. Aus preislicher Sicht wird man zum Sandstrahlen in der Regel Korundpulver verwenden. Das Korundpulver hat eine feine Körnung, dem grobe Körner beigemischt sind. Mit den groben und feinen Körner wird eine grob aufgeraute Struktur mit einer feinen Unterstruktur erzeugt. Die Strukturen haben eine grobe Struktur von etwa ein- bis zweihundert Mirkometern, der eine Feinstruktur mit etwa zehn bis dreissig Mikrometern überlagert ist.

Nach dem Aufrauen wird in einem Nasssprühverfahren eine Primerschicht aufgebracht. Beim Aufbringen der Primerschicht werden bereits die je nach beabsichtigter Verwendung die oben erwähnten, wärmeleitenden Partikel mit aufgebracht. Das Material für die Primer-schicht enthält im Wesenlichen Polytetrafluorethylen, Perfluoralkyd, Siliziumdioxid und Polyamidimid; weitere Zusatzstoffe werden je nach benötigten Fliessansprüchen zugefügt.

Auf diesen Primer folgt eine die wärmeleitenden Partikel seitlich bzw. auch oberflächlich umhüllend die antihaftend wirkende PTFE-Schicht mit wesentlichen Bestandteilen aus Polytetrafluorethylen, Perfluoralkyd und Farbpigment; weitere Zusatzstoffe im Prozentbereich können enthalten sein. Der Anteil von Polytetrafluorethylen ist hier etwa fünf bis sechs mal so hoch wie in der Primer-Schicht.

Die Antihaftschicht kann auch im wesentlichen ein Solgel sein, bzw. aus Silikaten oder Silikon aufgebaut sein. Die wärmeleitenden Partikel sind dann von einem derartigen Material umschlossen. Das Solgel enthält im Wesentlichen amorphes Siliziumdioxid, Alkyltrialkoxysilan und Silikonkarbidpulver. Das Solgel wird in mehreren Schichten nass in nass aufgebracht. Eine jeweils aufgebrachte Schicht dunstet nur ganz kurz ab; die nächste Schicht wird dann auf diese noch nasse Schicht aufgesprüht. Es wird hier nicht mehr zwischen Primer und der darauf liegenden, insbesondere antihaftend wirkenden Schicht unterschieden; beide Schichten sind eins. Die gesamte Schichtdicke variiert je nach Verwendung zwischen 2 µm und 15 µm. Die fertige Beschichtung wird anschliessend bei ca. 200 °C gesintert.

Da die Solgelschicht gegenüber der eingangs beschrieben Beschichtung (Primer + Antihaftbeschichtung mit einer Gesamtschichtdicke zwischen 20 µm und 40 µm) dünner ist, sind die einzulagernden wärmeleitenden Partikel je nach gewählter Schichtdicke zwischen etwa 2 µm und 15 µm zu wählen. Bei der Solgelschicht ist von einer Wärmeleitung im Bereich von etwa 0,2 W/m·°K bis 0,4 W/m·°K, also analog zu den eingangs angegebenen Werten, auszugehen. Da jedoch die Schichtdicke nun geringer ist, verringert sich auch der Prozentsatz einzulagernder wärmeleitender Partikel.

Sollte aus irgendwelchen Gründen auf die Einlagerung wärmeleitender Partikel verzichtet werden, so kann eine antihaftend wirkende Beschichtung auf einem Kochgeräteinnenboden auch als Solgel ausgeführt werden.

Das Beschichtungsmaterial muss die in der Grössenordnung der Schichtdicke befindlichen gut wärmeleitenden Partikel sehr gut fixieren, damit diese beim späteren Gebrauch des Kochgerätes nicht durch einen Schaber, Löffel etc., wie er beim Erwärmen zum Wenden und Rühren des Kochgutes verwendet wird, im Gebrauchszeitraum herausgearbeitet (herausgerieben) werden. Der Schaber, der Löffel etc. greift schliesslich direkt am Partikel bzw. in dessen unmittelbarer Umgebung an. Mit den oben beschriebenen Beschichtungen wurden zufriedenstellende Ergebnisse erzielt. Gemäss den untenstehenden Ausführungen können weitere Beschichtungen mit den dort angeführten Eigenschaften eingesetzt werden.

Entsprechend den definierten Kochgeräteeigenschaften muss die Beschichtung eine antihaftende Wirkung zeigen. Sie muss aber auch die Partikel, insbesondere seitlich, sehr gut fixieren. D.h., die Beschichtung darf im Laufe der Zeit durch Alterung nicht schrumpfen. Auch muss die Beschichtung eine ausreichende Elastizität und Kohäsion gegenüber den Partikeln aufweisen. Ferner muss die Beschichtung eine ausreichende Abrasionsresistenz haben. Diese Resistenz kann durch Beimischungen von harten Teilchen erreicht bzw. erhöht werden. Sofern möglich, kann durch "Kristallzieheffekte" erreicht werden, dass nicht nur glatte Kristallseitenflächen erzeugt werden, sondern die Kristalle (= Partikel) seitlich Mikroausstülpungen, d.h. Kristallgitterversetzungen aufweisen, welche eine gute Verzahnung in der Schicht bewirken.

Eine Fixierung der Partikel lässt sich insbesondere mit dem Primer erreichen, wobei im Primer z. B. enthaltene Amine die Partikel gut festhalten. Bei Kristallen mit sehr glatten Wänden, d.h. ohne wesentliche Kristallgitterversetzungen, sollte deshalb die Schichtdicke des Primers vergrössert werden (etwa bis zu einer Dicke von 10 µm). Der Primer ist dann um eine ausreichende Antihaftwirkung beim Kochgerät zu erreichen, wenigstens mit einer Schichtdicke von 10 µm mit einem antihaftend wirkenden Material zu überdecken.

**Patentansprüche**

1. Für zu erwärmendes Kochgut antihaftend beschichtetes Kochgerät, **dadurch gekennzeichnet, dass** die Beschichtung wärmeleitende Partikel **(9)** mit einer Wärmeleitfähigkeit grösser 200 W/m·°K aufweist sowie Grösse und Lage der Partikel **(9)** in der Beschichtung (3) derart sind, dass sie auf dem Kochgeräteinnenboden **(1)** mit einer Berührungstoleranz von weniger als 10% der gesamten Schichtdicke aufliegen und bis zur Beschichtungsoberseite **(11)** mit einer Schichtoberseitentoleranz von ±10% reichen.

2. Kochgerät nach Anspruch 1, **dadurch gekennzeichnet, dass** die Partikel Diamantkristalle **(9)** sind.

3. Kochgerät nach Anspruch 1 oder 2, **dadurch gekennzeichnet, dass** die Partikel Aluminiumpartikel sind, bevorzugt Aluminiumpartikel mit einer Additivierung mit Carbonnanoröhrchen, wobei die Aluminiumpartikel vorzugsweise eine eckige Ausbildung haben, und Abmessungen derart aufweisen, dass sie auf dem Kochgeräteinnenboden (1) mit der Berührungstoleranz von weniger als 10% der gesamten Schichtdicke aufliegen und bis zur Beschichtungsoberseite (11) mit der Schichtoberseitentoleranz von - 10% reichen und die Beschichtung einen basischen Charakter hat, um eine Oxydation der Aluminiumpartikel zu vermeiden.

4. Kochgerät nach einem der Ansprüche 1 bis 3, **dadurch gekennzeichnet, dass** die Partikel aus Siliziumcarbid bestehen.

5. Kochgerät nach einem der Ansprüche 1 bis 4, **dadurch gekennzeichnet, dass** die Partikel eine Matte bildende Carbonnanoröhrchen sind, und die Matte auf dem Kochgeräteinnenboden (1) mit der Berührungstoleranz von weniger als 10% der gesamten Schichtdicke aufliegt, bis zur Beschichtungsoberseite (11) mit der Schichtoberseitentoteranz von -10% reicht, und die Matte vom Beschichtungsmaterial durchtränkt und geringfügig überdeckt ist.

6. Kochgerät nach einem der Ansprüche 1 bis 5, **dadurch gekennzeichnet, dass** das Beschichtungsmaterial im Bereich der Schichtoberseite abrasivresistente harte Partikel, vorzugsweise Siliziumkarbid, enthält.

7. Kochgerät nach einem der Ansprüche 1 bis 6, **dadurch gekennzeichnet, dass** das beschichtete Kochgerät eine zweischichtige Beschichtung hat und direkt auf dem Kochgeräteinnenboden **(1)** ein sehr dünner Primer **(5),** vorzugsweise mit einer Dicke im Mikrometerbereich, liegt, der vorzugsweise wesentliche Anteile von Polytetrafluorethylen, Perfluoralkyd, Siliziumdioxid und Polyamidimid enthält, und der Primer **(5)** mit einer weiteren Schicht **(7)** überdeckt ist, welche insbesondere wesentliche Anteile von Perfluoralkyd und Netzmitteln sowie einen 4 bis 6-mal höheren Anteil an Polytetrafluorethylen als der Primer **(5)** enthält.

8. Antihaftend wirkendes, beschichtetes Kochgerät, insbesondere nach einem der Ansprüche 1 bis 6, **dadurch gekennzeichnet, dass** das Beschichtungsmaterial ein sogenanntes Solgel mit wesentlichen Anteilen von amorphen Siliziumdioxid, Alkyltrialkoxysilan und einem harten Material ist.

einzige Figur

Europäisches
Patentamt

European
Patent Office

Office européen
des brevets

# EUROPÄISCHER RECHERCHENBERICHT

Nummer der Anmeldung

EP 11 40 5345

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2007/070601 A2 (DU PONT [US]; MITSUI DU PONT FLUORCHEMICAL [JP]; HAYAKAWA OSAMU [JP] M) 21. Juni 2007 (2007-06-21) | 1,2 | INV. C23C30/00 A47J36/00 |
| A | * Seite 2, Zeile 19 - Seite 3, Zeile 9 * <br> * Seite 4, Zeile 5 - Seite 10, Zeile 31 * <br> * Seite 11, Zeile 19 - Seite 12, Zeile 32 * <br><br> * Seite 23, Zeile 12 - Seite 24, Zeile 3 * <br> * Seite 24, Zeile 9 - Seite 26, Zeile 5; Tabellen 4,6 * <br> ----- | 3-8 | |
| X | JP 8 173321 A (TOSHIBA TUNGALOY CO LTD; TOSHIBA HOME TECH KK) 9. Juli 1996 (1996-07-09) * Zusammenfassung * * Automatische Übersetzung des JPOs * ----- | 1,2 | |
| A | EP 1 048 751 A1 (HORT STEFAN [CH] HORT COATING CT [CH]) 2. November 2000 (2000-11-02) * das ganze Dokument * ----- | 1-8 | |

RECHERCHIERTE SACHGEBIETE (IPC)

C23C
A47J

Der vorliegende Recherchenbericht wurde für alle Patentansprüche erstellt

| Recherchenort | Abschlußdatum der Recherche | Prüfer |
|---|---|---|
| Den Haag | 9. März 2012 | Ovejero, Elena |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument
.........
& : Mitglied der gleichen Patentfamilie, übereinstimmendes
      Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 11 40 5345

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-03-2012

| Im Recherchenbericht angeführtes Patentdokument | Datum der Veröffentlichung | Mitglied(er) der Patentfamilie | Datum der Veröffentlichung |
|---|---|---|---|
| WO 2007070601 A2 | 21-06-2007 | AU 2006326444 A1 | 21-06-2007 |
| | | AU 2011200940 A1 | 24-03-2011 |
| | | BR PI0620670 A2 | 22-11-2011 |
| | | CN 101330986 A | 24-12-2008 |
| | | CN 101914320 A | 15-12-2010 |
| | | EP 1973672 A2 | 01-10-2008 |
| | | EP 2332661 A1 | 15-06-2011 |
| | | JP 2009519816 A | 21-05-2009 |
| | | KR 20080078047 A | 26-08-2008 |
| | | WO 2007070601 A2 | 21-06-2007 |
| JP 8173321 A | 09-07-1996 | JP 2589459 B2 | 12-03-1997 |
| | | JP 8173321 A | 09-07-1996 |
| EP 1048751 A1 | 02-11-2000 | AT 280850 T | 15-11-2004 |
| | | DE 50008380 D1 | 02-12-2004 |
| | | EP 1048751 A1 | 02-11-2000 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 08173321 B
- JP 7067784 B

- EP 1048751 A